**Europäisches Patentamt**

(19) **European Patent Office**

**Office européen des brevets**

(11) Publication number: **0 003 950**
**B1**

(12) **EUROPEAN PATENT SPECIFICATION**

(45) Date of publication of patent specification: **07.07.82**

(21) Application number: **78100960.0**

(22) Date of filing: **22.09.78**

(51) Int. Cl.³: **B 66 F 7/00, B 60 R 3/02, E 04 F 11/04, B 60 P 1/46**

(54) Wheelchair lift.

(30) Priority: **13.03.78 US 885714**

(43) Date of publication of application:
**19.09.79 Bulletin 79/19**

(45) Publication of the grant of the patent:
**07.07.82 Bulletin 82/27**

(84) Designated Contracting States:
**BE CH DE FR LU NL SE**

(56) References cited:
**US - A - 4 027 807**

(73) Proprietor: **TRANSPORTATION DESIGN & TECHNOLOGY, INC**
**9345 Cabot Drive**
**San Diego California 92126 (US)**

(72) Inventor: **Thorley, Graham Roy**
**9345 Cabot Drive**
**San Diego California 92126 (US)**

(74) Representative: **Weinstein, Zinovi**
**31, Cuvillierstrasse**
**D-8000 München 80 (DE)**

Courier Press, Leamington Spa, England.

## Wheelchair lift

This invention relates to loading mechanisms, and, more particularly, to lift devices suitable for loading handicapped persons with or without wheelchairs into vehicles such as busses or other types of public conveyances. It also relates to lift devices suitable for helping such persons in negotiating steps at the entrance of, or within, a building.

Lift devices which in the past were designed for vehicular use, were relatively bulky and cumbersome, taking up a great deal of space in the interior of such vehicles. It is clearly preferable to have the lift devices completely contained in the vehicles when such vehicles are in motion. However, the large size of the lift mechanisms has often necessitated external location of at least a portion of such equipment. The vehicle cargo capacity has often been greatly reduced by the portion of the lift mechanism located inside the vehicle.

Furthermore, the size and complexity of such lift mechamisms often required that a special opening be cut into the side of the vehicle, in addition to the normal entrances, in order to accommodate the lifts.

Lift mechanisms designed to help handicapped persons in negotiating steps at the entrance of, or within a building which have been provided up to the present time, have been relatively bulky and unsightly. These devices often interfere with the common use of the steps by normal people, and may require the opening of special doors or the installation of special ramps in addition to the normal entrances and stairways. The proposed lift device in its stowed position can act as the normal step structure and be completely hidden within it.

It has been proposed in US patent n° 4 027 807 belonging to the Applicant a wheel chair lift for helping handicapped persons in negotiating steps at the entrance of a vehicle, such as for example a bus, or within a building or the like, said lift comprising several sections which form in their stowed positions the normal entrance steps, and in their unfolded position a multi-sectional load-carrying platform which can be lowered or raised between the upper and lower level of the said steps.

The present invention relates to a lift device of the above general type wherein one of the platform sections may be expanded so as to provide a wider load-carrying platform which renders the latter more convenient for receiving and lifting wheel chairs and handicapped persons sitting thereon.

This object is achieved by one of the sections of the platform which comprises first and second flat elements each forming susbtantially one half of said section respectively and the inner edges of the first and second flat elements remote from the outer edges to which adjacent sections are hingedly connected are provided with complementary profiles with which the said inner edges matingly engage, whereby the width of said section may be expanded so as to provide said platform with an additional carrying surface in the unfolded position, and contracted when the lift is in the stowed position.

According to another feature of the invention, the inner edge of the first flat element comprises a line of crenels interlocking with a complementary line of crenels provided on the inner edge of the second flat element. This second element is sandwiched between two plates extending beyond the inner edge thereof, so that the inner edge of the first flat element telescopically engages into the sheath thus constituted. It is also to be noted here that spring means are provided between the first and second flat elements for resiliently pulling same towards their minimum common width.

Other purposes and advantages of the invention will appear more clearly from the following detailed description made with reference to the appended drawings given solely by way of example and wherein:

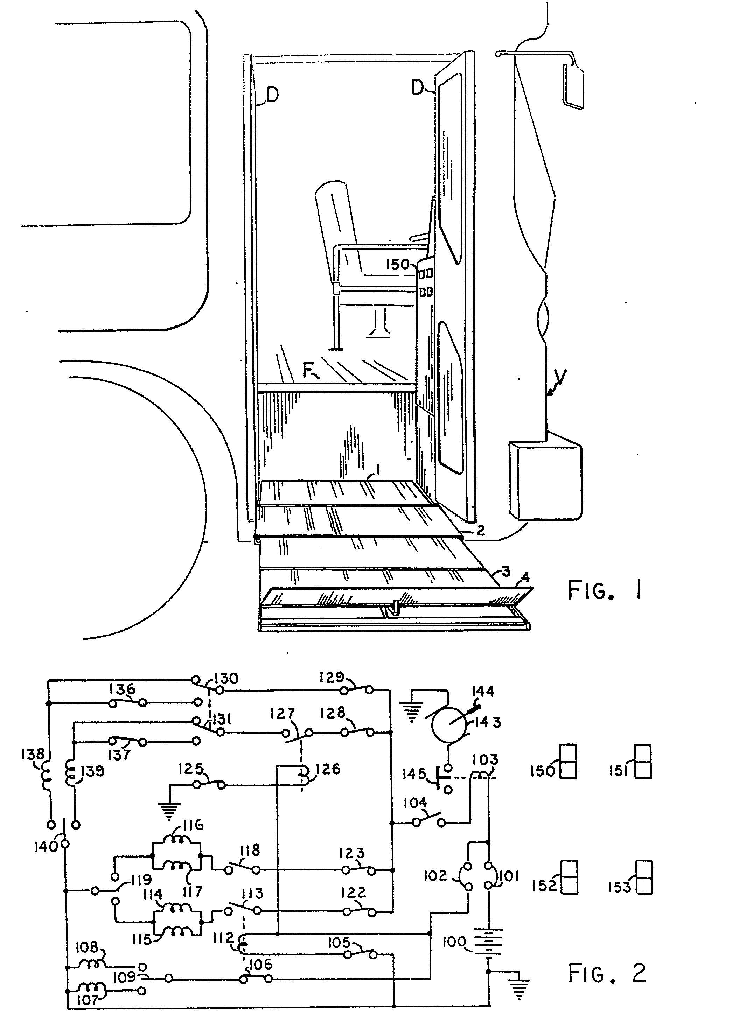

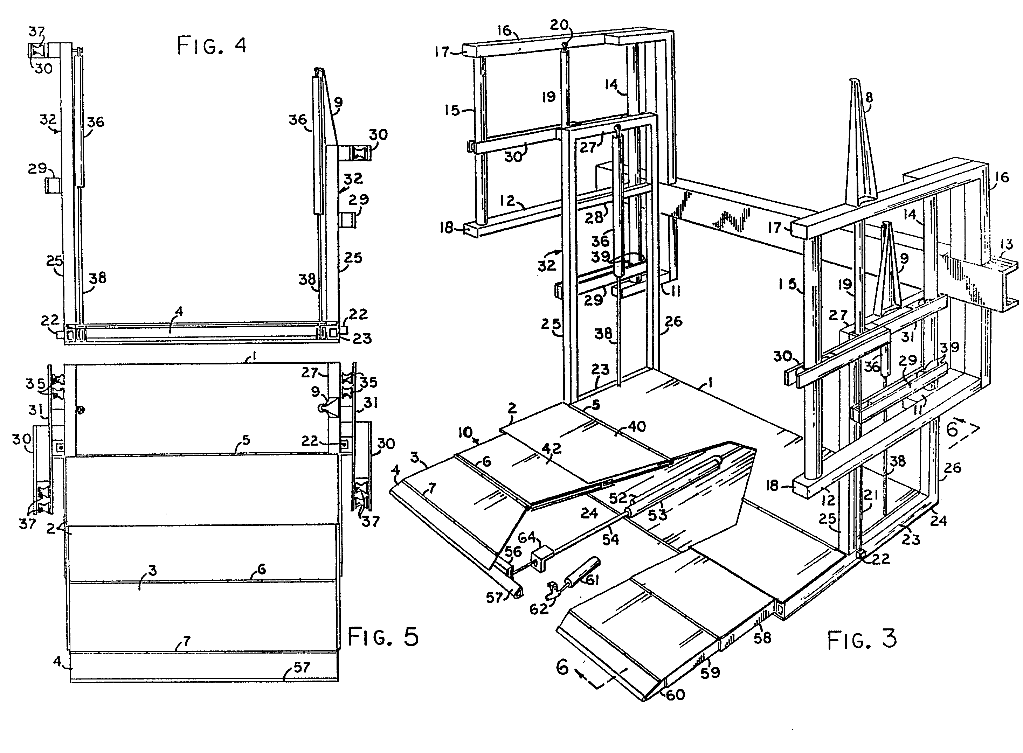

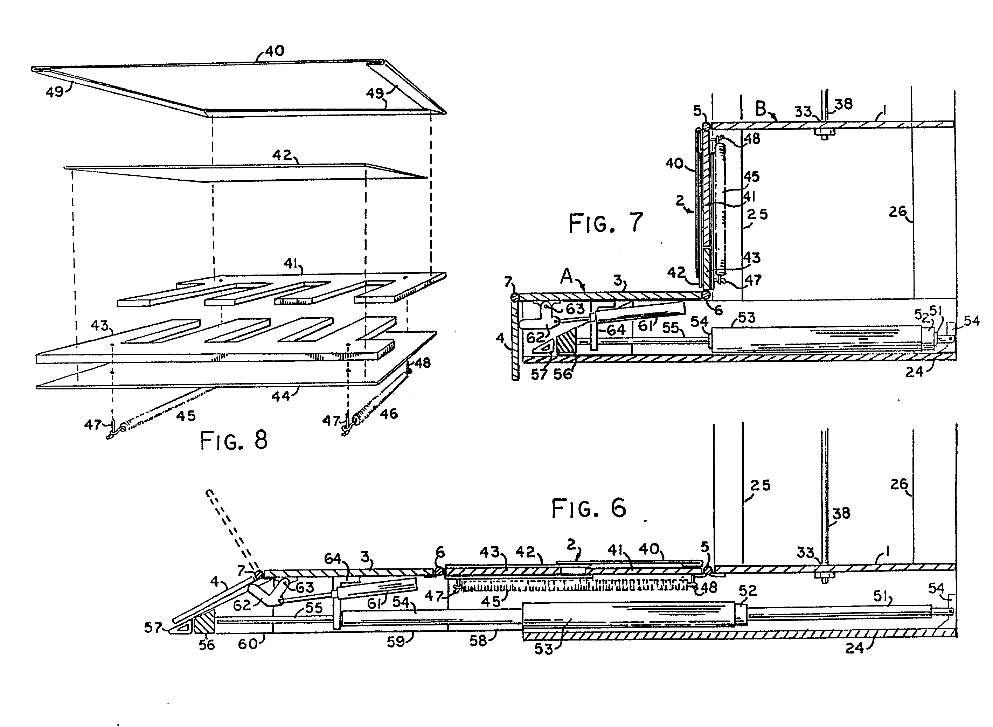

Figure 1 is a perspective view showing the invention installed in the entrance of a public transportation vehicle in the deployed position; Figure 2 is a schematic of the electrical system; Figure 3 is a perspective view of the supporting structure and lift mechanism in the deployed position; Figure 4 is a front elevational view of the lift carriage; Figure 5 is a top view of the lift carriage, showing the deployed platform; Figure 6 is a side sectional view taken along the line 6—6 of Figure 3; Figure 7 is a sectional view similar to Figure 6, but showing the platform in the stowed, step-forming position; Figure 8 is an exploded, perspective view of the expandable section.

Referring now to the drawing, as an example of one embodiment of this invention, there is shown a wheel chair lift device mounted within the doorway of a public transportation vehicle.

In Figure 6 the lift is deployed in its lower position. It should be noted that the surface of the load-carrying platform 10 is formed by the level section 1 of step B (which is normally the closest to the vehicle floor in the stowed position) and the level Section 3 of step A, which has been extended outward, the joint raiser section 2 between steps A and B (which has been laid down flat), and the raiser section 4 below step A. The four sections 1, 2, 3, and 4 are articulated by being hinged together along their edges 5, 6, and 7. In order to return the lift to the stowed position the level section 3 on step A is withdrawn and the raiser section 2 is raised to a vertical position so that the level surfaces 1 and 2 are placed on two different levels forming the entrance steps.

The lower raiser section 4, as shown in figure 6 can be rotated to form a sloping access ramp to the load carrying platform 10. It can also be flipped upward as shown in broken lines in order to prevent a load such as a wheelchair from rolling backwards during motion of the platform 10.

Referring now to figure 3, the lift device comprises two pairs of horizontal girders 11 and 12 welded to the frame 13 of the vehicle V, and located at opposite sides of the doorway. Girders 11 support two vertical cylindrical rods 14 which are capped at their upper end by the horizontal section of "L" shaped stanchions 16. Girders 12 are preferably anchored to the wall of the vehicle at ends 18. Stanchions 16 are anchored to the wall of the vehicle at their upper ends and to beam 13 of the vehicle at their lower ends. The vertical cylindrical rods 14 and 15 hereinafter referred to as "lifting guides", girders 11 and 12 and stanchions 16 form the supporting framework of the lift device and its stationary components.

The moving components of the lift device comprising the articulated platform sections 1, 2, 3, and 4 and associated means to form the lift platform, are mounted on a generally "U" shaped carriage 32 designed to ride vertically along and between the two pairs of lifting guides 14 and 15. As more specifically shown in figures 4 and 5, this carriage comprises a base formed by 2 iron beams 23 linked by a rectangular skid plate 24 flanked by two lateral elements extending upward from the base.

Each lateral element is formed by vertical members 25 and 26 fastened to beam 23, and crossmembers 27 and 28.

Each lateral element is slidingly connected to lifting guides 14 at its upper end through bracket 31 at mid-section through bracket 29, and to lifting guide 15 through brace 30.

Pairs of pulley shaped rollers 35 and 39, and 37 having grooved rims matching the convexity of cylindrical guides 14 and 15, are mounted within bracket 31, 29 and brace 30 respectively capturing said guides and providing a smooth and stable movement of carriage 32 vertically along and between them.

Two hydraulic cylinders 19 are connected at their upper and closed ends to the horizontal sections of stanchions 16 by pin 20. Pistons moving within these cylinders under hydraulic fluid pressure are connected at their outer ends through rod 21 to beams 23 by means of pin 22 thus providing means for lifting carriage 32 along and between the lifting guides 14 and 15.

The level section 1 of step B is seen riding between vertical members 25 and 26 which act as vertical guides during its collapsing motion.

Two hydraulic cylinders 36 are connected at their upper closed ends to cross-members 27. Pistons moving within these cylinders under hydraulic fluid pressure are connected at their outer ends through rods 25 to opposite ends of level section 1 thus providing means for vertically moving step B along and between members 15 and 26.

Since the lift is designed to be installed in the front right entrance well of a public vehicle, and in order not to obstruct the driver's field of vision, the right side supporting elements 11, 12, and 16 are mounted on a lower level than their opposite left side elements.

The carriage right lateral element is also shorter than the left lateral element. Brackets 8 and 9 are used to compensate for the difference in height and to hold hydraulic cylinders 19 and 36 respectively at levels sufficient to yield the required lifting action.

The level section 3 of step A is fastened to element 59 of slide assemblies associated with beams 23. Each slide assembly is made of three telescopic elements 58, 59 and 60.

These types of standard slide assemblies well known to persons skilled in the mechanical arts are used in a variety of commercial and industrial applications to provide a low friction slidable coupling between mechanical structures. These slides are commercially available under various trade names and generally comprise an outer member channels capturing an inner member between rows of ball bearings.

Elements 58 of the slides are slidingly connected to the inside lateral surface of beams 23. Elements 59 are slidingly connected to elements 58 and support level section 3 of the platform. Elements 60 are connected to elements 59, are tapered down toward the front of the platform, and are designed to support the raiser section 4.

The two elements 60 are cross-connected by an end beam 56. A pressure sensitive sensor 57 runs along end beam 56.

The raiser section 2 of step B comprises two telescopic interconnecting flat elements 41 and 43. The upper element 41 is hingedly connected along its upper edge to level section 1 of step B. The lower element 43 is hingedly connected along its lower edge to level element 3 of step A. Their opposing edges are crenalated in order to form interlocking patterns as shown in figure 8. The lower element 43 is sandwiched between the step surface plate 42 and the supporting plate 44. The upper element 41 telescopically and partially engages into the sheath thus constituted. A step surface cover 40 having overlapping edges 49 is fastened to the upper element 41. The overlapping edges are bent under the cover to provide a sliding space for the other surface plate 42.

The two elements 41 and 43 are resiliently kept to their minimum common width by a pair of coil springs 45 and 46. Attached to lower element 43 by pins 47 and to upper element 41 by pins 48.

When the platform is in the stowed position, as illustrated in figure 7, the raiser section 2 is allowed to shrink to its minimum width under the pull of the coil springs 45 and 46.

When the platform is fully deployed, as illustrated in figures 3 and 6, the raiser section 2 is expanded to its maximum width in order to provide additional load carrying surface.

Two hydraulic cylinders 52 and 53 mounted back to back have their piston rods 51 and 54 extending in opposite directions. The end of rod 51 is connected to a bracket 50 in the lower back corner of the carriage 32. The end of rod 54 is extending into a smaller diameter rod 55. Rod 55 passes through a hole in the center of bracket 64 associated with level section 3 of step A, and is connected to the end beam 56.

When rods 51 and 54 are extended under fluid pressure the end beam 56 is first pushed forward, causing the raiser section 4 of step A to rotate upward around hinge 7 until it forms an access ramp to the load-carrying platform 10 as illustrated in figure 6.

At this point rod 54 comes in contact with bracket 64, and begins to push level section 3 of step A forward.

This forward motion is coordinated with a downward motion of level section 1 of step B under the action of hydraulic cylinders 36.

As the hydraulic cylinder rods 52 and 54 continue their outward movement the expandable raiser section 2 of step B is stretched to its maximum elongation between level sections 1 and 3.

When the platform 10 has been loaded with a wheelchair, the raiser section 4 of step A can be flipped upward under the action of level 62 associated with hydraulic cylinder 61 in order to provide an angle stop for the wheelchair.

The pressure sensor mounted along the outer edge of end beam 56 is made of flexible material. Any pressure applied to the sensor upon contact with any object is transmitted through its fluid to a pressure switch, which is part of electrical safety control system.

Grooved plastic or rubber mats are preferably used to cover the steps and ramp surfaces for safety purposes.

The means for operating the hydraulic cylinders, such as those used in this invention, are well known to people skilled in the mechanical arts, and comprise a source of pressurized fluid, such as a pump, and various conduits for feeding the pressurized fluid to manually conduits for feeding the pressurized fluid to manually direct the flow of pressurized fluid into the cylinders on either sides of the pistons, so as to control the movement and direction of the pistons within the cylinders. Solenoid controlled valves also having manual lever control are preferably used in the present invention, and in combination with the cylinders and associated means, constitute the electro-hydraulic powered means to operate the lift.

Referring now to figure 2, in addition to the other drawings, I shall describe the operation of the lift device.

The lifting motion of cylinders 19 (fig. 3) is controlled by valve solenoid 138; the lowering action being controlled by valve solenoid 139.

The outward deploying motion of cylinders 53 and 54 (fig. 6) is controlled by valve solenoid 115; the inward retracting action by valve solenoid 116.

The step lowering motion of cylinder 36 (fig. 4) is controlled by valve solenoid 114, and the step raising motion by valve solenoid 117.

The electrical power supply comprises the vehicle battery 100 protected by circuit breakers 101 and 102.

Manual switches 150, 151, 152, and 153 are accessible from the driver's seat or from the entrance area of the vehicle, and allow the driver or the lift user to control the operation of the lift. Switches 150, 151, and 152 are preferably of a momentary type which return to the off position when released.

A three-position switch 150 controls the position of the common 140, and is used to raise or lower the carriage 32. A three position switch 151 controls the position of the common 119, and is used to deploy or retract the platform 10. A three position switch 152 controls the position of common 109, and is used to raise or lower the wheel chair angle stop 4. A two position switch 153 controls commons 130 and 131, and is used to return the lift to its stowed location.

While the switch 153 is in the NORMAL position, holding switch 150 to the DOWN position energized the valve solenoid 139 through switch 131, 127, 128, and 104. Coil 103 of the pump control solenoid switch 145 is energized and the pump 143 is started, causing the lowering of the carriage 32 by cylinders 19.

Holding switch 150 in the UP position energized the valve solenoid 138 through switches 130, 129, and 104. The pump 143 is similarly started and the platform 10 is deployed by extending step section 3 under action of cylinders 52, and 53, while step section 1 is lowered under simultaneous action of cylinders 36.

Holding the switch 151 in the IN position energized the valve solenoids 116 and 117 through switches 118, 123, and 104. The pump 143 is similarly started, and the step section 3 is retracted under action of the cylinders 52 and 53, while the step section 1 is raised under simultaneous action of the cylinders 36.

While the switch 152 is held in the LOCK position, valve solenoid 108 of hydraulic cylinder 61 is activated through switches 109, and 106. The lever 62 pivots around pin 63, thus causing section 4 to rotate upward around hinge 7.

While the switch 152 is held in the UNLOCK position, the action of hydraulic cylinder 61 is inverted by valve solenoid 107 through switches 109 and 106 causing section 4 to return toward its DOWN position.

The various mechanical motions just described are further controlled through the following switch means. In most public transit vehicles, the door opening mechanism is interlocked with the braking system in order to prevent accidental opening of the vehicle while it is in motion. Therefore, in order to block the operation of the lift device while the doors are closed or the vehicle is moving, the electric power supply is run through a pole of the vehicle door interlock switch, which close contact 104 only when the door is fully open.

A down limit switch actuated when rods 21 (fig. 3) reach the maximum extension opens switch 128 thus stopping pump 143. An up limit switch, actuated when the platform 10 reaches the level of the vehicle floor F opens switch 129 in order to stop further lifting action of platform 10. An outward limit switch actuated when the platform 10 is fully deployed, opens switch 122 stopping the deployment operation.

An inward limit switch, actuated when the platform 10 is fully retracted opens switch 123 in order to stop further retraction of the platform 10. A mat-type contact switch, located under the skid plate 24, and actuated whenever the platform touches ground or an obstacle, closes switch 125, energizing the coil of obstruction relay 126, causing switch 127 to open. This interrupts further downward motion of the platform 10.

A stop-down limit switch actuated when the wheel chair angle stop 4 is down, closes switch 118 in order to allow retraction of section 3 only when the angle stop 7 is lowered.

A ramp-out limit switch actuated when the ramp is fully extended closes switch 106 in order to prevent raising the angle stop 4 while the section 3 is retracted.

A stowed position switch actuated when the carraige 10 reaches its normal step position opens switches 136 and 137, stopping further upward or downward motion of the carriage when switch 153 is in the STOW position.

A pressure switch located along the end beam 56 and actuated whenever the ramp hits an obstacle, closes switch 105, energizing the coil of relay 112, thus opening switch 113, and preventing any further extension of the platform 10. The standard sequence of operation is generally as follows. After opening the door D of the vehicle V, hand flipping switch 153 to the NORMAL position, the driver holds switch 150 in the DOWN position until the carriage 32 touches ground. After releasing switch 150, he holds switch 151 in the OUT position until the platform 10 is fully deployed. After the loading of the wheel chair onto the platform 10 the angle stop 4 is raised by holding switch 152 in the LOCK position for a short while.

The platform 10 is raised to the level of the vehicle floor F by holding the switch 150 in the UP position. After entry of the wheel chair into the vehicle, switch 153 is returned to the STOW position. The angle stop 4 is lowered by holding switch 152 in the UNLOCK position.

The carriage 32 is lowered to the stow away level by holding switch 150 to the DOWN position and the platform 10 is retracted into the stowed step position by next holding the switch 151 on the IN position. The sequence of operation may be appropriately reversed to lower a wheel chair from the vehicle floor to the ground. The carriage 32 may also be lowered or raised without unfolding the steps A and B into a platform.

A lever 44 is mounted on pump 143, along with manual control of the valves, to operate the lift device in case of electric power failure. The pump itself is preferably located near the entrance and/or control switches.

While I have described one embodiment of the present invention, many variations may be suggested without departing from the scope of the invention. For instance, an electro-electric motor means could be used to control the operation of the wheelchair stop-flap in place of the mechanism described here.

It will be apparent to those skilled in the art that other variations may be made in the details of construction and application without departing from the scope of this invention as defined in the following claims.

**Claims**

1. A wheel chair lift for helping handicapped persons in negotiating steps at the entrance of a vehicle, such as for example a bus, or within a building or the like, comprising several sections which form in their stowed positions the normal entrance steps, and in their unfolded position a multi-sectional load carrying platform which can be lowered or raised between the upper and lower level of said steps, characterized in that one (2) of the said sections comprises first and second flat elements (41, 43) each forming substantially one half of said section (2) respectively and the inner edges of the first and second flat elements (41, 43) remote from the outer edges to which adjacent sections are hingedly connected are provided with complementary profiles with which the said inner edges matingly engage, whereby the width of said section may be expanded so as to provide said platform with an additional carrying surface in the unfolded position, and contracted when the lift is in the stowed position.

2. A wheel chair lift according to claim 1, characterized in that the inner edge of the first flat element (41) comprises a line of crenels interlocking with a complementary line of crenels provided on the inner edge of the second flat element (43).

3. A wheel chair lift according to claim 1 or 2, characterized in that the said second flat element (43) is sandwiched between two plates (42, 44) extending beyond the inner edge thereof, and the inner edge of the first flat element (41) telescopically engages into the sheath thus constituted.

4. A wheel chair lift according to any one of claims 1 to 3, characterized in that spring means (45, 46) are provided between said first and second flat elements (41, 43) for resiliently pulling same towards their minimum common width.

5. A vehicle whose at least one doorway entrance is equipped with a wheel chair lift according to any one of the preceding claims.

## Revendications

1. Elévateur de fauteuil roulant pour aider des personnes handicapées à franchir des marches à l'entrée d'un véhicule, tel que par exemple un autobus ou à l'intérieur d'un bâtiment ou analogue, comprenant plusieurs sections qui forment, dans leurs positions rangées, les marches normales d'entrée et, dans leur position déployée, une plate-forme porte-charge à sections multiples qui peut être abaissée ou élevée entre les niveaux respectivement supérieur et inférieur desdites marches, caractérisé en ce que l'une (2) desdites sections comprend des premier et second éléments plats (41, 43) constituant respectivement chacun sensiblement une moitié de ladite section (2) et les bords internes du premier et second éléments plats (41, 43), qui sont éloignés des bords externes auxquels des sections adjacentes sont articulées, sont pourvus de profils complémentaires par lesquels lesdits bords internes viennent en contact de façon conjuguée, de sorte que la largeur de ladite section peut être dilatée de façon à munir, ladite plateforme, d'une surface portante supplémentaire dans la position déployée, et contractée lorsque l'élévateur est dans la position rangée.

2. Elévateur de fauteuil roulant selon la revendication 1, caractérisé en ce que le bord interne du premier élément plat (41) comprend une ligne de créneaux s'enclenchant dans une ligne complémentaire de créneaux prévue sur le bord interne du second élément plat (43).

3. Elévateur de fauteuil roulant selon la revendication 1 ou 2, caractérisé en ce que le second élément plat (43) est placé en sandwich entre deux plaques (42, 44) s'étendant au-delà du bord intérieur de celui-ci et le bord intérieur du premier élément plat (41) s'engage télescopiquement dans la gaine ainsi constituée.

4. Elévateur de fauteuil roulant selon l'une quelconque des revendications 1 à 3, caractérisé en ce que des moyens formant ressorts (45, 46) sont prévus entre lesdits premier et second éléments plats (41, 43) pour tirer élastiquement ceux-ci vers leur largeur commune minimale.

5. Véhicule dont au moins un accès de baie de porte est équipé d'un élévateur de fauteuil roulant selon l'une quelconque des revendications précédentes.

## Patentansprüche

1. Rollstuhlhebevorrichtung für körperbehinderte Personen zum Überwinden von Stufen am Eingang eines Fahrzeugs, wie zum Beispiel eines Busses, oder in einem Gebäude oder dergleichen, die mehrere Teile besitzt, die in ihrer Staustellung die normalen Eingangsstufen und in ihrer ungefalteten Stellung eine mehrstufige, Last tragende Plattform bilden, die zwischen der oberen und der unteren Ebene der genannten Stufen hebbar und senkbar ist, dadurch gekennzeichnet, dass eines (2) der genannten Teile erste und zweite Flachelemente (41, 43) besitzt, die jeweils im wesentlichen eine Hälfte des genannten Teiles (2) der Plattform bilden, und dass die inneren Ränder der ersten und zweiten Flachelemente (41, 43), die von den äusseren Rändern entfernt sind, an denen benachbarte Teile gelenkig angebracht sind, mit komplementären Profilen versehen sind, mit denen die inneren Ränder schlüssig verbunden sind, wobei die Breite des genannten Teiles zur Bildung der genannten Plattform mit einer zusätzlichen tragenden Fläche in der ungefalteten Stellung erweiter bar ist und verringerbar ist, wenn die Hebevorrichtung sich in ihrer Staustellung befindet.

2. Rollstuhlhebevorrichtung nach Anspruch 1, dadurch gekennzeichnet, dass der innere Rand des ersten Flachelementes (41) eine Reihe von Zinnen besitzt, die in eine komplementäre Reihe von Zinnen am inneren Rand des zweiten Flachelementes (43) eingreift.

3. Rollstuhlhebevorrichtung nach Anspruch 1 oder 2, dadurch gekennzeichnet, dass das zweite Flachelement (43) sandwichartig zwischen zwei Platten (42, 44) angeordnet ist, die über dessen inneren Rand hinausragen, und dass der inneren Rand des ersten Flachelementes (41) teleskopartig in die so gebildete Hülle eingreift.

4. Rollstuhlhebevorrichtung nach einem der Ansprüche 1 bis 3, dadurch gekennzeichnet, das Federmittel (45, 46) zwischen dem ersten und zweiten Flachelement (41, 43) angebracht sind, um diese elastisch zueinander in eine Stellung geringster gemeiner Breite zu bringen.

5. Fahrzeug mit wenigstens einem türartigen Eingang, der mit einer Rollstuhlhebevorrichtung gemäss einem der vorangehenden Ansprüche versehen ist.

FIG. 1

FIG. 2

FIG. 4

FIG. 5

FIG. 3

0 003 950

FIG. 7

FIG. 8

FIG. 6

0 003 950